Europäisches Patentamt

European Patent Office

Office européen des brevets

(11) Publication number: **0 114 515**
A2

# (12) EUROPEAN PATENT APPLICATION

(21) Application number: **83307879.3**

(22) Date of filing: **22.12.83**

(51) Int. Cl.³: **G 01 J 3/46**

(30) Priority: **22.12.82 NZ 202895**

(43) Date of publication of application:
**01.08.84 Bulletin 84/31**

(84) Designated Contracting States:
**CH DE FR GB LI NL SE**

(71) Applicant: **DEVELOPMENT FINANCE CORPORATION OF NEW ZEALAND**
**Development Finance Centre Corner Grey and Featherston Streets**
**Wellington(NZ)**

(72) Inventor: **Nguyen, Dinh Thong**
**20 Cheriton Road**
**Howick Auckland(NZ)**

(74) Representative: **Horton, Andrew Robert Grant et al,**
**BOULT, WADE & TENNANT 27 Furnival Street**
**London, EC4A 1PQ(GB)**

(54) Method and apparatus for colour recognition.

(57) Apparatus for recognising colour is provided which comprises receiving means preferably in the form of an optical probe (1) to receive the visual image of a colour, analyse the image into its primary colour constituents and give electrical outputs representing the type and quantum of each primary colour. The apparatus further includes processing means (2) to convert electrical outputs into codes, and comparing the information with data in memory to determine the colour of the image. The apparatus preferably includes a vocalised output.

Fig.1.

EP 0 114 515 A2

"METHOD AND APPARATUS FOR COLOUR RECOGNITION"

This invention relates to colour recognition and in particular to methods of and/or apparatus for recognising colour and providing an output signal in response to the colour recognised.

The output may, for example, be in vocalized form, may be stored in a suitable form for subsequent analysis or inspection, .or may be used to drive other devices such as a computer interface or a system controller.

It is an object of the present invention to provide apparatus for and/or a method of recognising colour which will at least provide the public with a useful choice.

Accordingly, in one aspect the invention consists in apparatus for recognising colour, said apparatus comprising receiving means to receive a visual image of a colour; analysing means to analyse said image into its primary colour constituents, said analysing means giving electrical outputs representing the type and quantum of each primary colour; and processing means to convert said electrical outputs into codes representing said colour.

In a further aspect the invention consists in a method of recognising colour, said method comprising the steps of receiving a visual image of a colour; analysing said image into its primary colour constituents and providing a plurality of electrical signals representing the type and quantum of each of said primary colours; and processing said electrical signals into codes representing said colour.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

One preferred form of the invention will now be described with reference to the accompanying drawings in which:

Figure 1 shows a functional block diagram of colour recognition apparatus according to the invention;

Figure 2 is a graph showing the wave length response of an amorphous photo-colour sensing unit incorporated in apparatus according to the invention;

Figure 3 shows an edge elevational view of an optical probe incorporated in apparatus according to the invention;

Figure 4 shows a side elevational view of the probe shown in figure 3;

Figure 5 shows an end view of the probe shown in figures 3 and 4;

Figure 6 shows a system diagram of a signal acquisition section incorporated in colour recognition apparatus according to the invention;

Figure 7 shows a system memory map for a microprocessor incorporated in apparatus according to the invention;

Figure 8 shows a diagram of the 8-levels of non-linear quantization of inputs incorporated in apparatus according to the invention;

Figure 9 shows a flow chart of the colour recognition main program;

Figure 10 shows specifications of one form of amorphous photo-colour sensing unit incorporated in the embodiment of apparatus hereinafter described;

Figure 11 indicates colour codes for the minimum recognition system incorporated in the apparatus hereinafter described; and

Figures 12 to 19 show colour template matricies for the minimum recognition system.

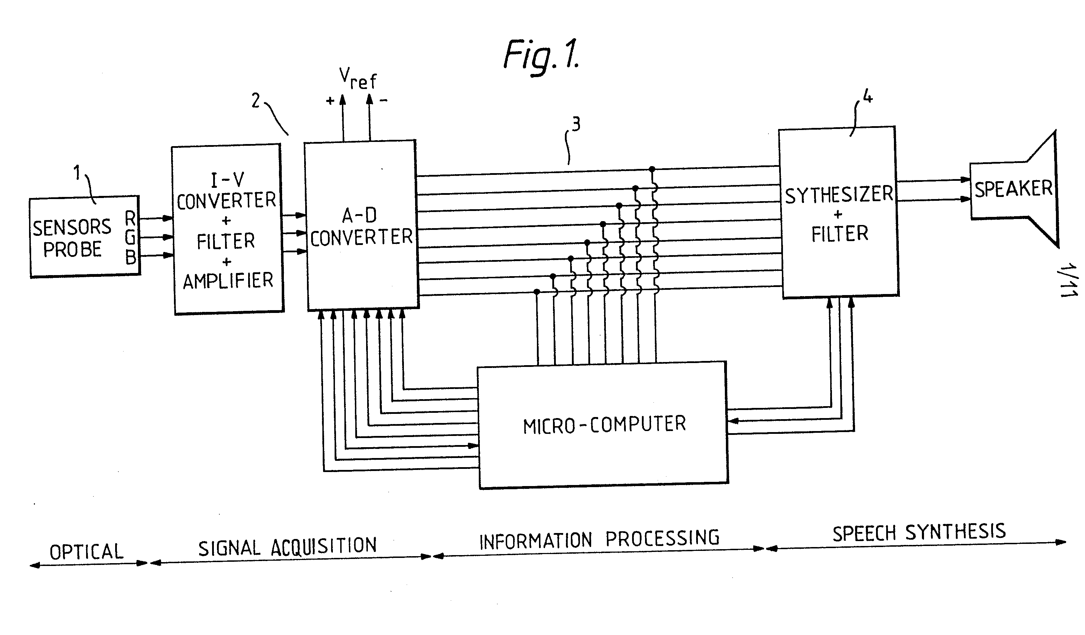

Referring to figure 1, the preferred embodiment of the invention consists of four functional sections - an optical probe 1, a signal acquisition section 2, an information processing section 3 and preferably a speech synthesis section 4. Each of these will be described in greater detail in turn.

Broadly the optical probe 1 looks at a surface whose colour is to be indicated by projecting a light beam into the surface then obtaining the currents induced on the three elements within the photo sensor unit (red, green and blue) by the reflected light. The signal acquisition section converts these currents into voltages, amplifies and filters, and finally digitizes these voltages into 8-bit binary numbers to be read in by a microprocessor in the information processing section. The latter carries out the recognition algorithm to determine what colour the optical probe is looking at, then outputs a sequence of binary numbers which are preferably in the form of codes of the phonetical sounds of that colour. These codes are then preferably received by a speech synthesis section which outputs an analogue signal of the synthesized sound which is then amplified and fed to a loud speaker or an earphone.

The Optical Probe

The colour of an object is largely determined by its molecular structure or its dye and the perception of colours depends on the ability of the eyes to detect reflected light from the object. There are six spectral peaks in the sensational response of the human eyes across the narrow visible spectrum from about 700 to 400nm corresponding to six primary colours: RED, ORANGE, YELLOW, GREEN, BLUE and VIOLET. Any other hue consists of a combination of two or more of these primaries.

In general, surface materials act as filters to the incident light and reflect only certain wave lengths corresponding to their particular colours. A white surface, for example, can be represented as an all-pass filter, and a surface having a simple colour such as red, a band-pass filter. A surface having a colour such as purple is more like a band-reject (or twin-pass) filter with peaks corresponding to red and blue. Therefore to recognize the colour of an object, it is necessary to examine the reflected light.

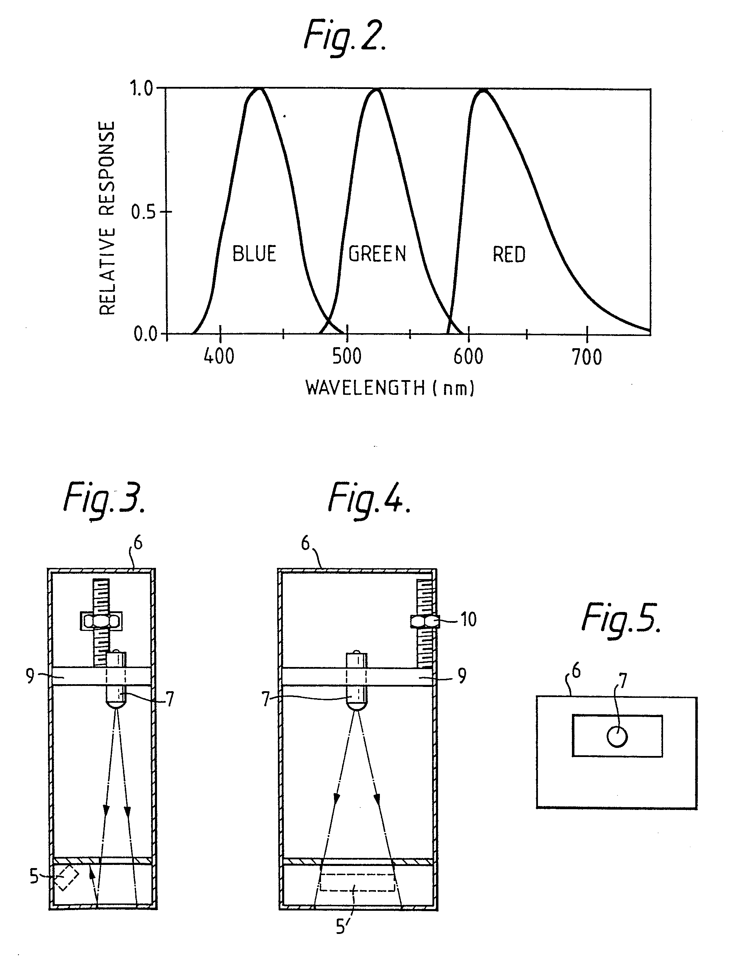

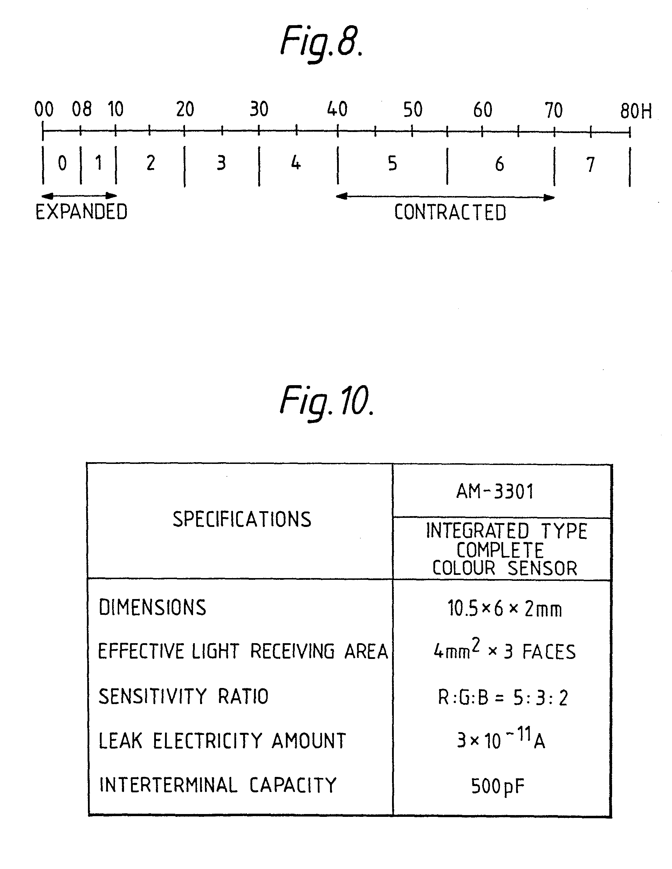

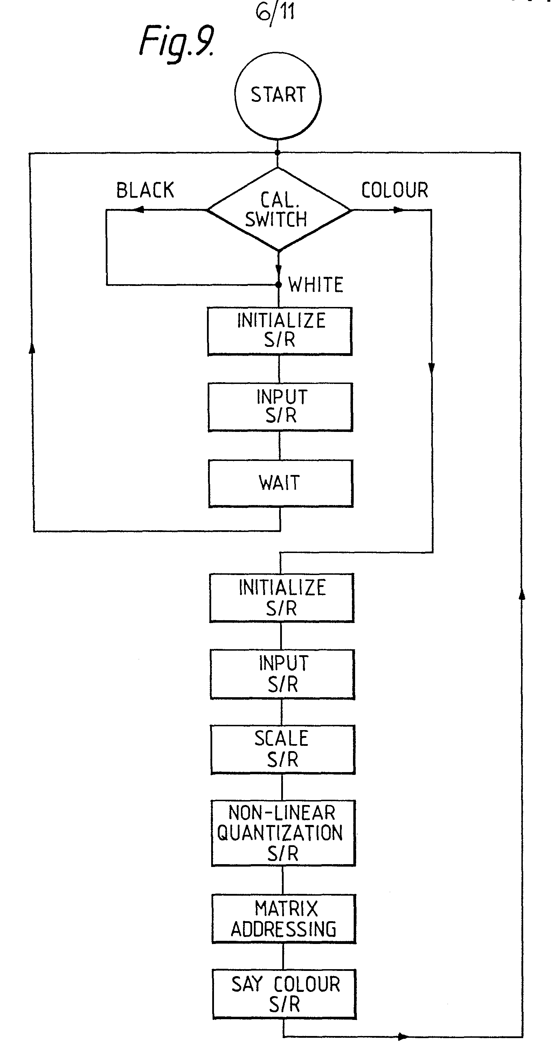

There are two different practical approaches by which this can be done. The first method is to illuminate the object with white light and measure the spectral distribution of the reflected light using an array of colour photo sensors. The second method is to successively illuminate the object with light of different colours, then measure the corresponding relative reflected light using a wideband photo sensor. The first approach is preferably used in this apparatus as it is simpler to construct an optical probe with only one light source and three photo sensors, red, green and blue. Such sensors have recently become available from Sanyo Electrical Co.Limited, either in the form of a separate element for each colour or as a single integrated unit of all three colours. In the embodiment herein described a single integrated unit of the AM 3301 type is used, the specification of which is shown in figure 10. Figure 2 shows the wave length response of this unit.

If a coloured surface is magnified many times, it will appear rough. The roughness is inversely proportional to the glossiness, i.e. the higher the gloss, the smoother the surface. The reason the surface appears glossy is that it is acting more like a mirror, directly reflecting light rather than scattering it. The scattered reflection contains the coloured light, while the direct reflection contains mainly the incident light without having undergone any filtering effect. The colour photo sensing unit is positioned in such a way that when a glossy surface is examined, only the scattered reflection is detected. For a matt surface, the direct reflection is not so dominant compared to the scattered component.

Referring now to figures 3 to 5, the photo colour sensing unit 5 is incorporated in a substantially rectangular enclosure 6 together with a white light source 7. The spacing of the unit 5 with respect to the light source 7 is a critical element in that the sensing unit 5 must be placed in the region of scattered light only, to avoid receiving any directly reflected light. To this end the light source 7 is mounted on a movable bracket 9 and an adjustment screw 10 is provided to adjust the distance of bracket 9, and thus light source 7 from the sensing unit 5.

In the embodiment shown, the enclosure 6 is substantially 100mm high x 40mm wide x 25mm deep. The sensing unit 5 is placed at an angle of 45° to the illuminated surface and the elements within sensor 5 are in a line rather than in a circle. This is so as to enable the detector to be used to look at long thin objects such as coloured wires. If an object is narrower than the illuminated area, it must be placed on a black surface.

The light source 7 has to be as close as possible to white light so that it emits all colours, at least within the visible spectrum, with substantially equal intensity. Daylight gives a good approximation of white light but if this were to be used it would restrict the use of the device to daylight hours. We have found that particularly good results are achieved using a 3.5 volt halogen lamp manufactured by Welch Allen Limited. This type of bulb is used in a medical ophthalmoscope and the overall size of the bulb is about 15mm x 6mm.

The Signal Acquisition Section

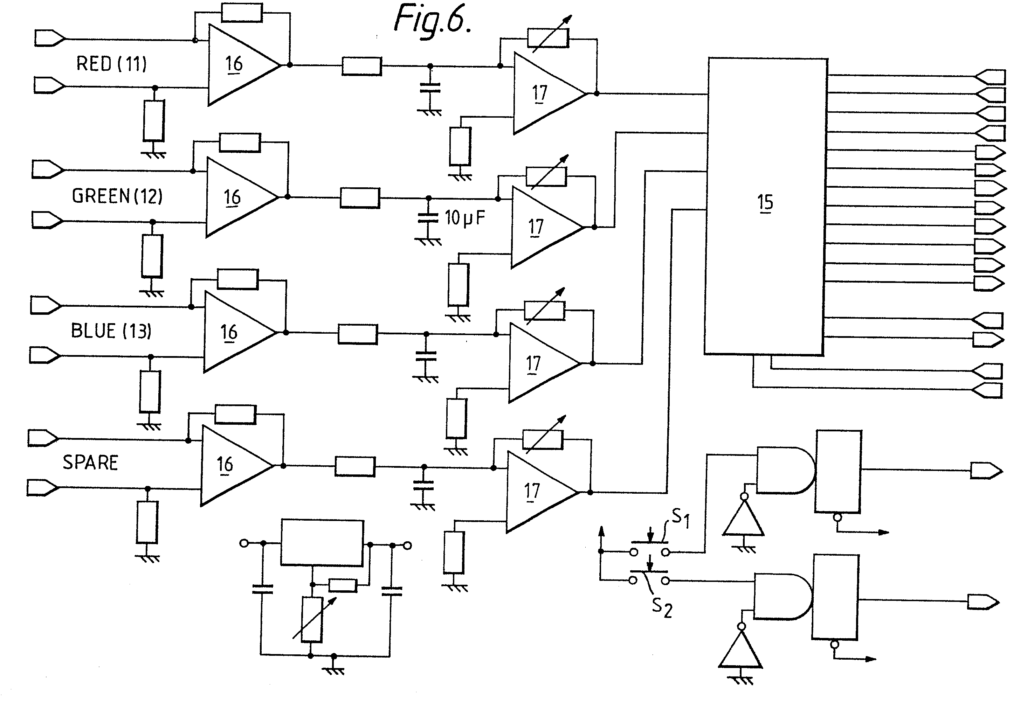

Referring to figure 6, the output current from each element 11, 12, 13 of the colour photo sensing unit 5 as located in the probe, is less than a microamp. It is converted to a usable voltage level to be compatible with an analogue-to-digital converter 15. This is achieved by feeding each current into a differential trans-resistance amplifier 16 which gives an output V=2IR. To reject any noise and high frequency components and to obtain the required level for the A-D converter, the voltage is passed through a simple first order RC low pass filter 17 having a 10Hz cutoff and adjustable gain up to 100. The overall gain of the detector section is in the range from 0.2 to 20 volts/microamp.

The complete circuitry of the signal acquisition section is shown in figure 6. Two LM 324 quad op-amps are intentionally used to avoid any differential environmental and ageing effects on the performance of the op-amps.

The analogue voltages corresponding to red, green and blue are as shown sequentially multiplexed into an ADC 0808 A-D converter 15 under the addressing control of the microprocessor in the information processing section. The A-D converter 15 operates from 0 V and +5 V supplies and the 1MHz clock from the microprocessor. The input voltages are restricted to 2.5 V maximum (i.e. half full scale) in order to avoid complications in the software programming.

The Information Microprocessing Section

The heart of this section is a MC 6802 which is a single chip microprocessor with a 128-bytes scratch pad RAM and a divide-by-four clock circuitry on-board. A 4MHz external crystal connected to the microprocessor provides a stablizied 1MHz system clock from the E pin of the microprocessor, necessary for the A-D converter 15.

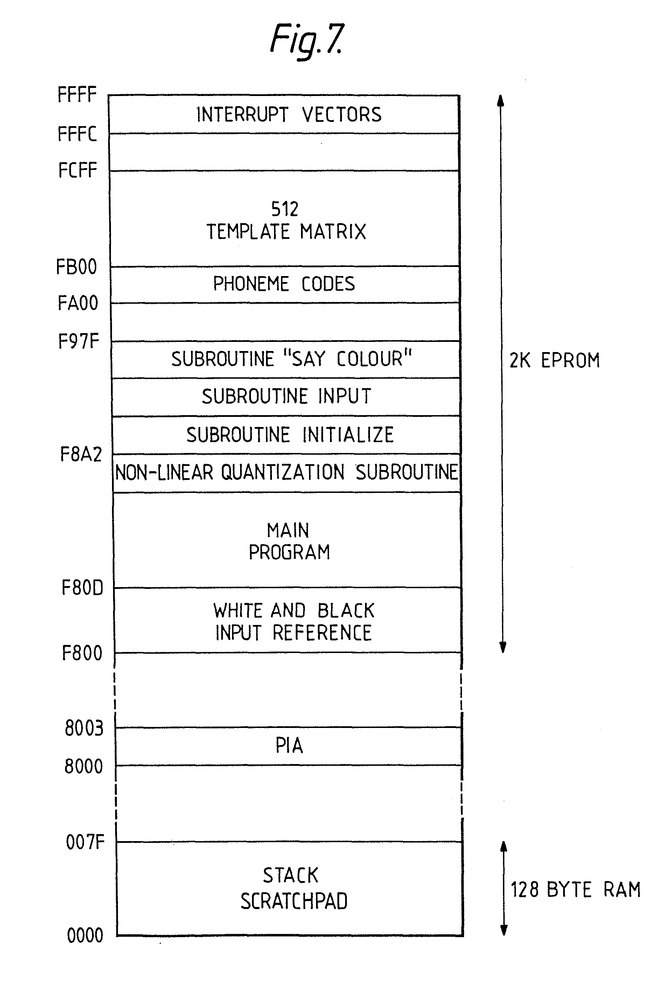

The memory map of the microprocessing system is shown in figure 7. A logical low applied to the reset line will cause the microprocessor to fetch the starting address of the main program (F800) which is stored in the top two memory locations. The two address lines A14 and A15 are used to decode the three memory sections in the system: 00 for the scratched-pad RAM, 01 for the PIA and II for the EPROM which contains the main program.

## The Colour Recognition Software

The microprocessor acquires from the A-D converter the three input voltages corresponding to the three primary colours red, green and blue.  The function of the recognition software is to arrive at an unambiguous deduction as to what the colour of the reflecting surface is.

## Calibration Procedure

While the spectral content of the scattered light from a surface depends on the material of the surface, i.e. its molecular structure and of course the spectral distribution of the light source, the intensity of the scattered light depends on the surface glossiness, and also on the intensity of incident light which may vary during the measurement.  Therefore an accurate colour recognition algorithm must be preceded by a calibration for the type of surface material and glossiness.  Also with proper calibrations, it is not critical that the light source should meet the CIE standards for "white" source, nor that the light source should have a time invariant output.

The calibration procedure is then as follows.  When the optical probe is looking at a calibrating white surface, all the three input voltages (red, green and blue) are adjusted by the scale subroutine to read full scale (80H).  When the probe is looking at a calibrating black surface, all the three inputs are adjusted to read 00.  This will also take care of any dc offset in the input circuits.  When the probe is looking at a coloured surface of the same material and glossiness, the three inputs are scaled to read

$$\text{scale input} = \frac{(\text{Actual input} - \text{calibrating black})}{(\text{Calibrating white} - \text{calibrating black})} \times 80H$$

To maintain the accuracy of the 8-bit input read into an accumulator, the 16-bit product from the multiplication

by 80H is obtained by simply shifting that accumulator right once with carry, and then shifting the carry bit into the MSB of the other accumulator (which has first been cleared). After the division, rounding-off rather than truncation of the result is carried out.

In the unlikely event of the actual input being greater than the value for the calibrating white surface, the scaled input would be greater than 80H. It is then saturated by 80H by the subroutine. This situation could arise if the probe looked at a white surface that was whiter or cleaner than the one used for calibration.

The Colour Template Matrix

A colour template (or dictionary) is provided for each of three broad surface categories: full gloss, semi-gloss and matt, from an extensive experimental data base. Compilation of the templates was achieved using the direct three-dimensional representation of the input vector (R,G,B). The data base was the inputs from over 300 colour samples taken from enamel and matt paint charts (DULUX, BIP and British Paints), plastic and cloth, etc. This data base, whose values range from 00H to 80H, was plotted on a three dimensional chart using coloured dots, the horizontal x-axis representing red, the vertical y-axis representing green and the z-axis, which "runs" into the page, representing blue. At first, it was necessary to quantize each co-ordinate into 16 steps, so that for each quantized level of the blue (scaled) input, a "sheet" of red-versus-green plot was obtained. Once these 16 sheets were complete, definite distribution patterns of colours could be seen, the darker colours being concentrated towards the origin.

The origin represents the colour black; the point (80H, 80H, 80H) represents white and along the diagonal joining these two points are various shades from dark brown to light grey. Similar patterns can be seen for red, yellow and shades of orange. In general the colours were found to crowd too closely to each other near the origin and to spread widely away from it. This was particularly the case for glossy surfaces as the three colour sensors received only weak scattered light. The matt and cloth surfaces gave lighter shades as the proportion of the directly reflected light decreased and the scattered light increased.

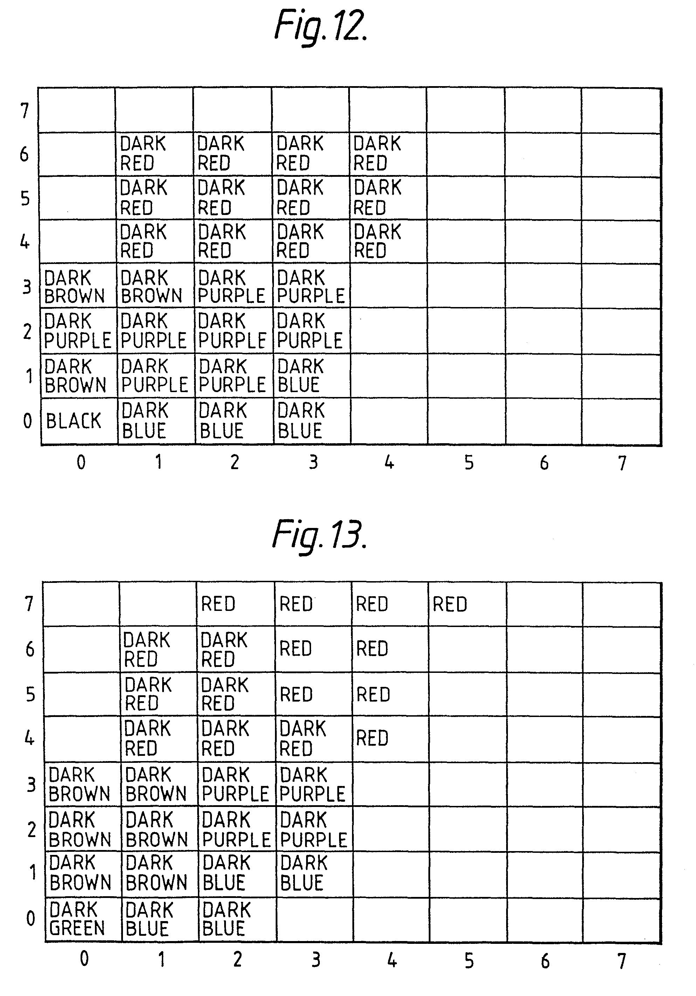

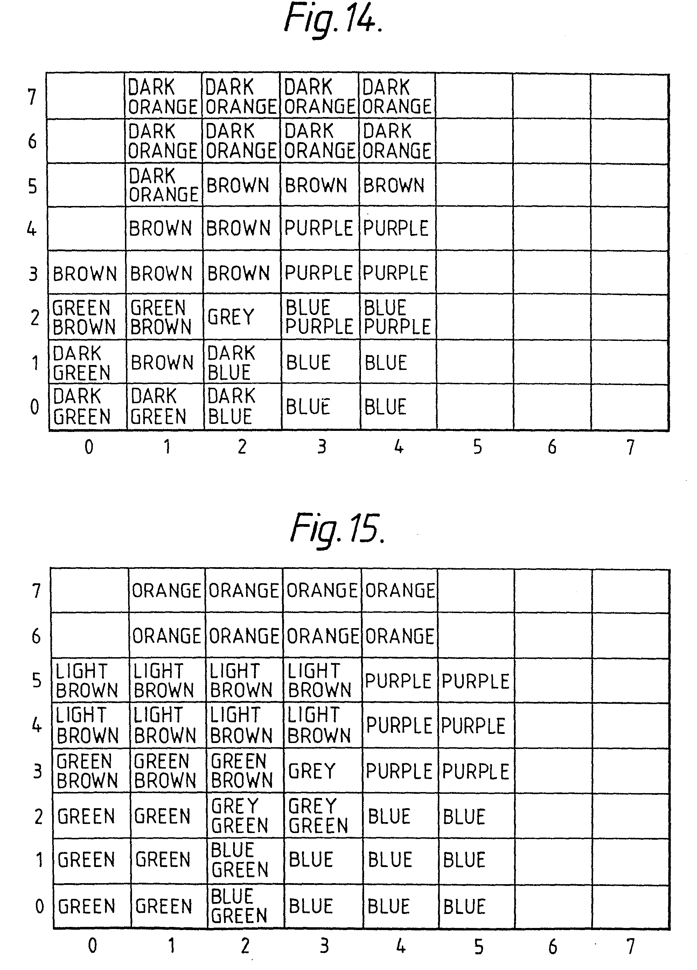

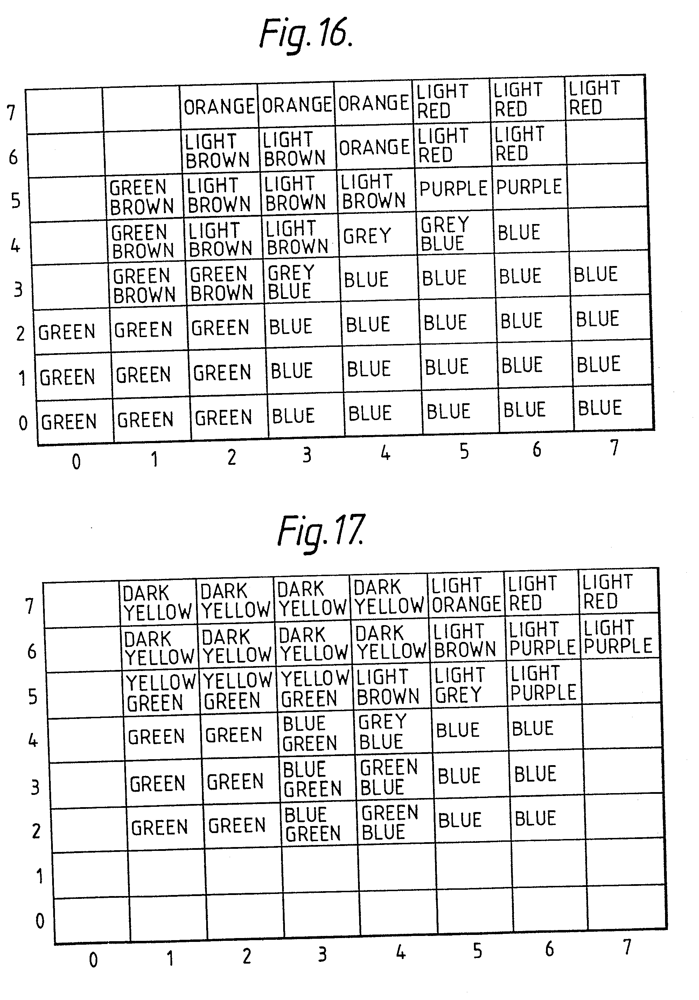

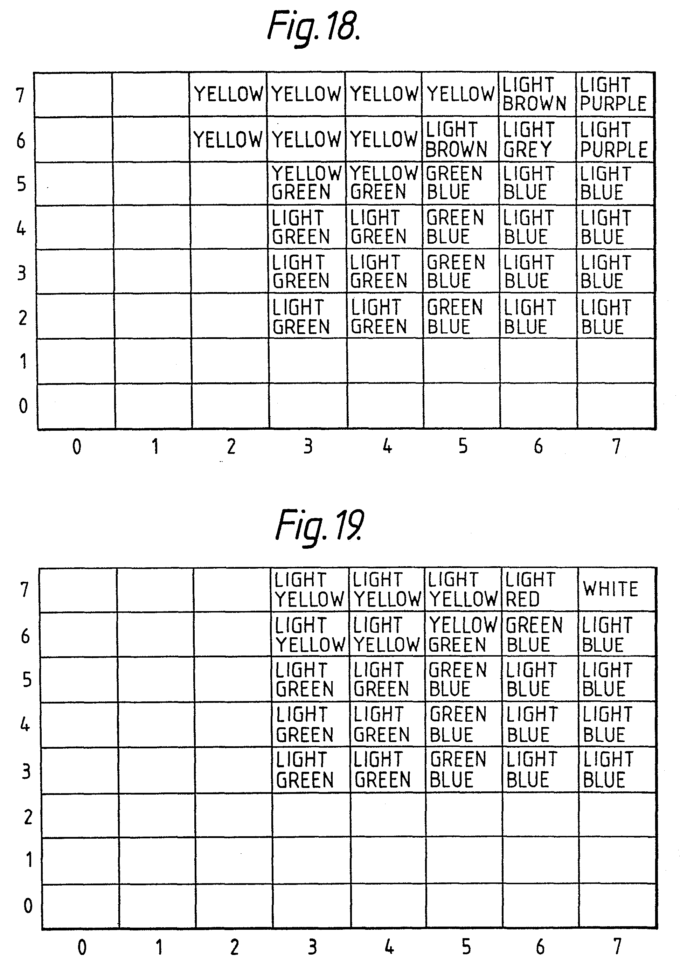

To improve the resolution of the chart, it was considered necessary to expand the lower part and on the other hand, to compress the upper part of the co-ordinates. A simple arbitrary scheme of 8-step non-linear quantization was finally decided on and this is shown in figure 8. The last step (7) was not contracted as it allowed for greater resolution of the very light colours and white. This non-linear quantization scheme has proved to give accurate recognition for the medium shades of colour, but the resolution is still not good enough at the two ends of the co-ordinates and therefore the accuracy decreases for the very light and very dark colours. Examples of the 8-sheets of colour template finally compiled for glossy surfaces are shown in figures 12 to 19.

Each quantized input has the value from 0 to 7, therefore a quantized input vector (R,G,B) can be represented uniquely by a 9-bit binary number from 000000000 to 111111111. This number is used to address the 512 elements of the template matrix which resides in the EPROM from the memory address FB00 to FCFF (Figure 7). In each of these 512 locations, the colour code of the corresponding colour is stored. Finally, the colour code provides the starting address of the string of the SC-01 phoneme codes for the Say colour subroutine. Figure 9 shows the complete flow chart of the main programme.

### The Minimum System

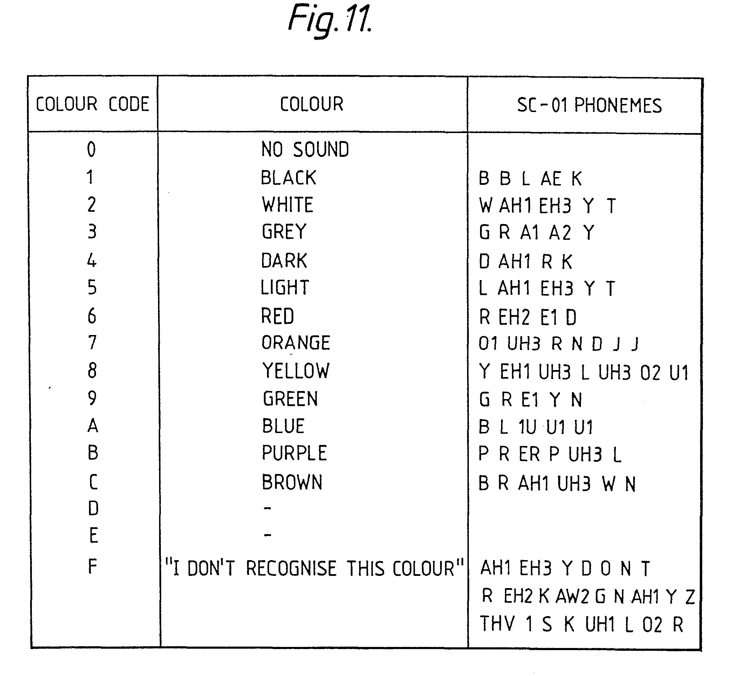

In principle, the colour codes must have 9 bits. However since many locations in the template matrix do not correspond to any colour, particularly towards the corners with the exception of the origin, it is convenient to use 8-bit codes to give the system a maximum of 256 colours. For some colours, the variance of the input vectors is spread widely producing overlapping of their locations in the template matrix. This is particularly apparent with colours which are in the close neighbourhood of one another in the frequency spectrum, e.g. green and blue, blue and purple, red and orange. In these situations, the dominant colour is chosen, but occasionally both colours are approximately equal, and so both colours are given the same location in the template matrix. This is possible in the final minimum system which was designed for 100% recognition of only 24 colours. In the minimum system each colour requires only 4-bit code from 0(H) to F(H) as shown in figure 11. For example, turquoise is described as green-blue and its colour code is 9A. Light blue, blue and dark blue are coded as 5A, 0A and 4A respectively. Colour code 0F is used when the input vector does not correspond to any of these 24 colours in the dictionary.

### Accuracy of the Minimum System

The performance of the minimum system has been tested by repeatedly taking readings of each colour many times while moving the optical probe around. It was found that the system performed consistently over a period of about 45 to 60 minutes of continuous operation, before calibration was required. That is to say, during this period the system consistently recognized correctly most of the colours but also consistently recognized incorrectly certain other colours. The light bluish-purple colour is a good example of the latter. The 30 readings for each of the three inputs for this colour were found to be normally distributed with very small variance. At worst, only one reading was found to deviate more than 2 units from the expected scaled value (in the range from 00 to 80). It was therefore asumed that :

red = 61 ± 2,          green = 5A ± 2          and blue = 6C ± 2 The input vector (61, 5A,6C) for the light bluish-purple, after the non-linear quantization scheme (figure 8) addressed the template matrix location (6,6,6) and was recognized as light grey. A simple solution to this is to increase the size and hence the resolution of the matrix. Therefore with occasional recalibration, it was possible to achieve 100% recognition rate with those 24 colours which were known a priori to have no ambiguities in their locations in the template matrix.

The Speech Synthesis Section

The synthesizer used in this design is the Votrax phonemic SC-01. The 6-bit input to this synthesizer allows the selection of any of the 64 English phonemes, and the two bits $I_1$ and $I_2$ permit the inflection (or pitch) of individual phonemes to be controlled to one of four levels. These 8-bit input lines are tristate-buffered to the system bus which is also shared by data lines coming out of the A-D converter.

The difficulty with using phonemic synthesizer is that while phonemes may be selected individually, it requires a great deal of linguistic skill to string the phonemes together to produce quality speech. The phoneme Hex. codes are stored in the EPROM from FA00 to FB00 (figure 7). The SC-01 is very simple to drive and we have adapted the circuitry of the Sweet-Talker speech synthesizer described in a publication entitled "Build an unlimited Vocabulary Speech Synthesizer" by S. Ciarcia - Byte Publications Inc, for convenience.

Thus the present invention provides a portable, relatively low cost, vocalized colour recognition system suitable for blind people. Although developed with blind people in mind, the apparatus herein described should find many potential uses in automatic and robotic colour recognition applications, in the quality control of processes involving the correct tinting of a product such as in the paint, plastics, and fabric industries. While a vocalized output may not be required in these circumstances, the colour recognition output can be used to drive other devices as is appropriate for the requirements, such as a computer interface or a system controller.

The apparatus above described indicates at least the feasibility of the blind being able to tell colours. Small optical probes, more elaborate processing and recognition algorithms with accompanying increases in cost, can improve the spatial and colour resolution and versatility of the system without departing from the scope of the invention as defined in the appended claims.

Claims

1. Apparatus for recognising colour, said apparatus comprising receiving means to receive a visual image of a colour, analysing means to analyse said image into its primary colour constituents, said analysing means giving electrical outputs representing the type and quantum of each primary colour; and processing means to convert said electrical outputs into codes representing said colour.

2. Apparatus as claimed in claim 1 further including output means to receive said codes and give a vocalized output of said colour.

3. Apparatus as claimed in claim 1 or claim 2 wherein said analysing means includes means to illuminate the object whose colour is to be sensed with white light and means to measure the spectral distribution of the reflected light.

4. Apparatus as claimed in claim 3 wherein said spectral distribution is measured using a colour photo sensing unit having elements responsive to each of the primary colours.

5. Apparatus as claimed in claim 4 wherein the outputs from said photo colour sensing unit are amplified, filtered and finally digitized.

6. Apparatus as claimed in claim 5 including a microprocessor to process the digitized voltages into a series of codes indicating colours and acceptable to the end receiver.

7. Apparatus as claimed in claim 6 wherein each colour is ascribed a three-dimensional vector co-ordinate in memory, said microprocessor being operable to compare the digitized outputs from said colour photo sensing unit with the vector co-ordinate in memory to thereby determine the colour.

8. Apparatus for recognising colour when constructed arranged and operable substantially as herein described with reference to the accompanying drawings.

- 14 -

0114515

9. A method of recognising colour, said method comprising the steps of receiving a visual image of a colour; analysing said image into its primary colour constituents and providing a plurality of electrical signals representing the type and quantum of each of said primary colours; and processing said electrical signals into codes representing said colour.

10. A method as claimed in claim 9 comprising the operative use of the apparatus claimed in any one of claims 1 to 9.

Fig.1.

OPTICAL — SIGNAL ACQUISITION — INFORMATION PROCESSING — SPEECH SYNTHESIS

## Fig.2.

## Fig.3.

## Fig.4.

## Fig.5.

Fig.6.

RED (11)

GREEN (12)

BLUE (13)

SPARE

10 µF

15

16

17

S₁

S₂

0114515

# Fig.7.

| Address | Section | Memory |
|---|---|---|
| FFFF | INTERRUPT VECTORS | |
| FFFC | | |
| FCFF | | |
| | 512 TEMPLATE MATRIX | |
| FB00 | | |
| | PHONEME CODES | 2K EPROM |
| FA00 | | |
| F97F | | |
| | SUBROUTINE "SAY COLOUR" | |
| | SUBROUTINE INPUT | |
| | SUBROUTINE INITIALIZE | |
| F8A2 | | |
| | NON-LINEAR QUANTIZATION SUBROUTINE | |
| | MAIN PROGRAM | |
| F80D | | |
| | WHITE AND BLACK INPUT REFERENCE | |
| F800 | | |
| 8003 | | |
| | PIA | |
| 8000 | | |
| 007F | | |
| | STACK SCRATCHPAD | 128 BYTE RAM |
| 0000 | | |

## Fig.8.

```
00  08  10      20      30      40      50      60      70      80H
|---|---|-------|-------|-------|-------|-------|-------|-------|
| 0 | 1 |   2   |   3   |   4   |     5     |     6     |   7   |
```

EXPANDED ←→          ←→ CONTRACTED →

## Fig.10.

| SPECIFICATIONS | AM-3301 |
|---|---|
| | INTEGRATED TYPE COMPLETE COLOUR SENSOR |
| DIMENSIONS | $10.5 \times 6 \times 2$ mm |
| EFFECTIVE LIGHT RECEIVING AREA | $4\text{mm}^2 \times 3$ FACES |
| SENSITIVITY RATIO | R:G:B = 5:3:2 |
| LEAK ELECTRICITY AMOUNT | $3 \times 10^{-11}$ A |
| INTERTERMINAL CAPACITY | 500 pF |

*Fig.9.*

0114515

## Fig.11.

| COLOUR CODE | COLOUR | SC-01 PHONEMES |
|---|---|---|
| 0 | NO SOUND | |
| 1 | BLACK | B B L AE K |
| 2 | WHITE | W AH1 EH3 Y T |
| 3 | GREY | G R A1 A2 Y |
| 4 | DARK | D AH1 R K |
| 5 | LIGHT | L AH1 EH3 Y T |
| 6 | RED | R EH2 E1 D |
| 7 | ORANGE | O1 UH3 R N D J J |
| 8 | YELLOW | Y EH1 UH3 L UH3 O2 U1 |
| 9 | GREEN | G R E1 Y N |
| A | BLUE | B L 1U U1 U1 |
| B | PURPLE | P R ER P UH3 L |
| C | BROWN | B R AH1 UH3 W N |
| D | - | |
| E | - | |
| F | "I DON'T RECOGNISE THIS COLOUR" | AH1 EH3 Y D O N T R EH2 K AW2 G N AH1 Y Z THV 1 S K UH1 L O2 R |

## Fig.12.

| y\x | 0 | 1 | 2 | 3 | 4 | 5 | 6 | 7 |
|---|---|---|---|---|---|---|---|---|
| 7 | | | | | | | | |
| 6 | | DARK RED | DARK RED | DARK RED | DARK RED | | | |
| 5 | | DARK RED | DARK RED | DARK RED | DARK RED | | | |
| 4 | | DARK RED | DARK RED | DARK RED | DARK RED | | | |
| 3 | DARK BROWN | DARK BROWN | DARK PURPLE | DARK PURPLE | | | | |
| 2 | DARK PURPLE | DARK PURPLE | DARK PURPLE | DARK PURPLE | | | | |
| 1 | DARK BROWN | DARK PURPLE | DARK PURPLE | DARK BLUE | | | | |
| 0 | BLACK | DARK BLUE | DARK BLUE | DARK BLUE | | | | |

## Fig.13.

| y\x | 0 | 1 | 2 | 3 | 4 | 5 | 6 | 7 |
|---|---|---|---|---|---|---|---|---|
| 7 | | | RED | RED | RED | RED | | |
| 6 | | DARK RED | DARK RED | RED | RED | | | |
| 5 | | DARK RED | DARK RED | RED | RED | | | |
| 4 | | DARK RED | DARK RED | DARK RED | RED | | | |
| 3 | DARK BROWN | DARK BROWN | DARK PURPLE | DARK PURPLE | | | | |
| 2 | DARK BROWN | DARK BROWN | DARK PURPLE | DARK PURPLE | | | | |
| 1 | DARK BROWN | DARK BROWN | DARK BLUE | DARK BLUE | | | | |
| 0 | DARK GREEN | DARK BLUE | DARK BLUE | | | | | |

## Fig.14.

| | 0 | 1 | 2 | 3 | 4 | 5 | 6 | 7 |
|---|---|---|---|---|---|---|---|---|
| 7 | | DARK ORANGE | DARK ORANGE | DARK ORANGE | DARK ORANGE | | | |
| 6 | | DARK ORANGE | DARK ORANGE | DARK ORANGE | DARK ORANGE | | | |
| 5 | | DARK ORANGE | BROWN | BROWN | BROWN | | | |
| 4 | | BROWN | BROWN | PURPLE | PURPLE | | | |
| 3 | BROWN | BROWN | BROWN | PURPLE | PURPLE | | | |
| 2 | GREEN BROWN | GREEN BROWN | GREY | BLUE PURPLE | BLUE PURPLE | | | |
| 1 | DARK GREEN | BROWN | DARK BLUE | BLUE | BLUE | | | |
| 0 | DARK GREEN | DARK GREEN | DARK BLUE | BLUE | BLUE | | | |

## Fig.15.

| | 0 | 1 | 2 | 3 | 4 | 5 | 6 | 7 |
|---|---|---|---|---|---|---|---|---|
| 7 | | ORANGE | ORANGE | ORANGE | ORANGE | | | |
| 6 | | ORANGE | ORANGE | ORANGE | ORANGE | | | |
| 5 | LIGHT BROWN | LIGHT BROWN | LIGHT BROWN | LIGHT BROWN | PURPLE | PURPLE | | |
| 4 | LIGHT BROWN | LIGHT BROWN | LIGHT BROWN | LIGHT BROWN | PURPLE | PURPLE | | |
| 3 | GREEN BROWN | GREEN BROWN | GREEN BROWN | GREY | PURPLE | PURPLE | | |
| 2 | GREEN | GREEN | GREY GREEN | GREY GREEN | BLUE | BLUE | | |
| 1 | GREEN | GREEN | BLUE GREEN | BLUE | BLUE | BLUE | | |
| 0 | GREEN | GREEN | BLUE GREEN | BLUE | BLUE | BLUE | | |

## Fig.16.

| | 0 | 1 | 2 | 3 | 4 | 5 | 6 | 7 |
|---|---|---|---|---|---|---|---|---|
| 7 | | | ORANGE | ORANGE | ORANGE | LIGHT RED | LIGHT RED | LIGHT RED |
| 6 | | | LIGHT BROWN | LIGHT BROWN | ORANGE | LIGHT RED | LIGHT RED | |
| 5 | | GREEN BROWN | LIGHT BROWN | LIGHT BROWN | LIGHT BROWN | PURPLE | PURPLE | |
| 4 | | GREEN BROWN | LIGHT BROWN | LIGHT BROWN | GREY | GREY BLUE | BLUE | |
| 3 | | GREEN BROWN | GREEN BROWN | GREY BLUE | BLUE | BLUE | BLUE | BLUE |
| 2 | GREEN | GREEN | GREEN | BLUE | BLUE | BLUE | BLUE | BLUE |
| 1 | GREEN | GREEN | GREEN | BLUE | BLUE | BLUE | BLUE | BLUE |
| 0 | GREEN | GREEN | GREEN | BLUE | BLUE | BLUE | BLUE | BLUE |

## Fig.17.

| | 0 | 1 | 2 | 3 | 4 | 5 | 6 | 7 |
|---|---|---|---|---|---|---|---|---|
| 7 | | DARK YELLOW | DARK YELLOW | DARK YELLOW | DARK YELLOW | LIGHT ORANGE | LIGHT RED | LIGHT RED |
| 6 | | DARK YELLOW | DARK YELLOW | DARK YELLOW | DARK YELLOW | LIGHT BROWN | LIGHT PURPLE | LIGHT PURPLE |
| 5 | | YELLOW GREEN | YELLOW GREEN | YELLOW GREEN | LIGHT BROWN | LIGHT GREY | LIGHT PURPLE | |
| 4 | | GREEN | GREEN | BLUE GREEN | GREY BLUE | BLUE | BLUE | |
| 3 | | GREEN | GREEN | BLUE GREEN | GREEN BLUE | BLUE | BLUE | |
| 2 | | GREEN | GREEN | BLUE GREEN | GREEN BLUE | BLUE | BLUE | |
| 1 | | | | | | | | |
| 0 | | | | | | | | |

## Fig.18.

| y | 0 | 1 | 2 | 3 | 4 | 5 | 6 | 7 |
|---|---|---|---|---|---|---|---|---|
| 7 | | | YELLOW | YELLOW | YELLOW | YELLOW | LIGHT BROWN | LIGHT PURPLE |
| 6 | | | YELLOW | YELLOW | YELLOW | LIGHT BROWN | LIGHT GREY | LIGHT PURPLE |
| 5 | | | | YELLOW GREEN | YELLOW GREEN | GREEN BLUE | LIGHT BLUE | LIGHT BLUE |
| 4 | | | | LIGHT GREEN | LIGHT GREEN | GREEN BLUE | LIGHT BLUE | LIGHT BLUE |
| 3 | | | | LIGHT GREEN | LIGHT GREEN | GREEN BLUE | LIGHT BLUE | LIGHT BLUE |
| 2 | | | | LIGHT GREEN | LIGHT GREEN | GREEN BLUE | LIGHT BLUE | LIGHT BLUE |
| 1 | | | | | | | | |
| 0 | | | | | | | | |

## Fig.19.

| y | 0 | 1 | 2 | 3 | 4 | 5 | 6 | 7 |
|---|---|---|---|---|---|---|---|---|
| 7 | | | | LIGHT YELLOW | LIGHT YELLOW | LIGHT YELLOW | LIGHT RED | WHITE |
| 6 | | | | LIGHT YELLOW | LIGHT YELLOW | YELLOW GREEN | GREEN BLUE | LIGHT BLUE |
| 5 | | | | LIGHT GREEN | LIGHT GREEN | GREEN BLUE | LIGHT BLUE | LIGHT BLUE |
| 4 | | | | LIGHT GREEN | LIGHT GREEN | GREEN BLUE | LIGHT BLUE | LIGHT BLUE |
| 3 | | | | LIGHT GREEN | LIGHT GREEN | GREEN BLUE | LIGHT BLUE | LIGHT BLUE |
| 2 | | | | | | | | |
| 1 | | | | | | | | |
| 0 | | | | | | | | |